# EUROPÄISCHE PATENTSCHRIFT

(11) **EP 3 942 535 B1**
(45) Veröffentlichungstag und Bekanntmachung des Hinweises auf die Patenterteilung: **18.03.2026**
(21) Anmeldenummer: 19731642.5
(22) Anmeldetag: 11.06.2019
(51) Int. Cl.: G07C 9/00, G07C 9/37, G07C 9/25, B64F 1/36

(54) **SYSTEM UND VERFAHREN ZUR KONTROLLE VON GEPÄCK**
SYSTEM AND METHOD FOR BAGGAGE CONTROL
SYSTÈME ET PROCÉDÉ DE CONTRÔLE DE BAGAGES

(43) Veröffentlichungstag der Anmeldung: 26.01.2022
(73) Patentinhaber: Flughafen Wien Aktiengesellschaft, 1300 Wien (AT)
(72) Erfinder: SPITZER, Franz, 3874 Litschau (AT)
(74) Vertreter: Puchberger & Partner Patentanwälte
(86) Internationale Anmeldenummer: PCT/EP2019/065199
(87) Internationale Veröffentlichungsnummer: WO 2020/249192

(56) Entgegenhaltungen:
- EP-A1- 3 147 840
- DE-A1- 102009 022 716
- US-A1- 2007 029 165
- US-A1- 2012 228 377
- US-B1- 7 193 515
- ELLIOT MARK: "Remote screening increases flexibility at Tallinn Airport", AIRPORT BUSINESS AUTUMN 2018, 29 November 2018 (2018-11-29), XP055970986

## Beschreibung

Die vorliegende Erfindung betrifft ein System und ein Verfahren zur Kontrolle von Gepäck gemäß dem Oberbegriff der unabhängigen Patentansprüche.

Viele öffentliche Einrichtungen, insbesondere Einrichtungen des öffentlichen Transports wie etwa Flughäfen weisen voneinander getrennte Teilbereiche auf, zwischen welchen ein Kontrollbereich angeordnet ist. Ein Passagier auf einem Flughafen betritt zuerst einen öffentlichen Bereich, passiert dann den Kontrollbereich, in welchem eine Sicherheitskontrolle erfolgt, und gelangt sodann in einen Sicherheitsbereich. In diesem Sicherheitsbereich können sich beispielsweise die Abflughalle oder einzelne Abfluggates befinden.

Eine derartige Sicherheitskontrolle dient einerseits der Überprüfung der Zugangsberechtigung einer Person in den Sicherheitsbereich und andererseits der Sicherstellung, dass keine unerlaubten Gegenstände in den Sicherheitsbereich gebracht werden. Zu diesem Zweck erfolgt üblicherweise eine Sicherheitsüberprüfung der Person selbst, als auch deren Gepäck.

Im Stand der Technik erfolgt die Sicherheitskontrolle üblicherweise derart, dass eine Person ihr Gepäck in einem Gepäckträger platziert, woraufhin das Gepäck und die Person getrennt voneinander eine Sicherheitskontrolle durchlaufen.

Derartige bekannte Systeme zur Kontrolle sind jedoch ineffizient, da die Kontrolle der Person und ihres Gepäcks in unmittelbarem Zusammenhang steht. Eine Person kann erst dann den Kontrollbereich betreten, wenn auch ihr Gepäck in den Kontrollbereich eingebracht wurde; ebenso kann die Person den Kontrollbereich erst verlassen, wenn ihr Gepäck den Kontrollbereich passiert hat. Durch die Kopplung der Personen- und Gepäckkontrolle entstehen unnötige Wartezeiten und die Systeme sind ineffizient. Dokument US2012/228377 A1 offenbart ein System und Verfahren zur Kontrolle von Gepäck gemäß dem Oberbegriff der Ansprüche 1 und 12.

Darüber hinaus ist das Gepäck während der Kontrolle im Wesentlichen frei zugänglich, sodass stets die Gefahr von Diebstahl besteht.

Die Aufgabe der vorliegenden Erfindung ist es, die Nachteile des Standes der Technik zu überwinden und ein System und ein Verfahren zur Kontrolle von Personen und Gepäck zu schaffen, das eine höhere Effizienz und einen höheren Durchsatz an Personen und Gepäck erlaubt, sowie das Gepäck während der Kontrolle möglichst sicher aufbewahrt.

Diese und andere Aufgaben der Erfindung werden durch ein System und ein Verfahren gemäß der unabhängigen Patentansprüche gelöst.

Erfindungsgemäß vorgesehen ist ein System zur Kontrolle von Personen und Gepäck an einem Übergang zwischen einem öffentlichen Bereich und einem Sicherheitsbereich, zwischen denen ein Kontrollbereich vorgesehen ist, der einen Gepäckabgabebereich, einen Personenkontrollbereich, einen Gepäckkontrollbereich sowie einen Gepäckausgabebereich umfasst. Ferner ist eine **Datenverarbeitungseinheit** vorgesehen, die beispielsweise eine zentrale Steuereinheit mit einer CPU, einem flüchtigen Speicher (RAM), einem nichtflüchtigen Speicher (ROM) und Kommunikationsschnittstellen umfasst. Die Kommunikationsschnittstellen können TCP/IP-Netzwerkschnittstellen, USB-Schnittstellen, serielle Schnittstellen und dergleichen zur Kommunikation mit den verschiedenen Einheiten des erfindungsgemäßen Systems umfassen. Die Datenverarbeitungseinheit beschränkt sich hierbei nicht auf einen zentralen Computer, sondern kann auch als verteiltes Client-Server-System mit unterschiedlichen Computereinheiten in unterschiedlichen, voneinander getrennten Sicherheitsebenen ausgeführt sein.

Erfindungsgemäß ist vorgesehen, dass der Gepäckkontrollbereich baulich vom Personenkontrollbereich getrennt ist. Die bauliche Trennung kann insbesondere derart ausgeführt sein, dass den im Personenkontrollbereich befindlichen Personen der Zugriff auf das im Gepäckkontrollbereich befindliche Gepäck nicht möglich ist.

Im Gepäckabgabebereich ist eine **Abgabeidentifikationseinheit** angeordnet, die dazu ausgeführt ist, biometrische Merkmale einer Person zu bestimmen, daraus einen eindeutigen biometrischen Token zu generieren, und den Token an die Datenverarbeitungseinheit zu übermitteln.

Bei der Abgabeidentifikationseinheit kann es sich beispielsweise um eine Kamera, ein Mikrofon, einen Fingerabdrucksensor oder Kombinationen dieser Vorrichtungen handeln, die dazu ausgeführt sind, biometrische Merkmale wie insbesondere Körpermerkmale, Gesichtsmerkmale, Irismerkmale, Retinamerkmale, Stimmmerkmale und/oder Fingerabdrücke einer Person zu detektieren.

Der **biometrische Token** kann vorzugsweise ein durch eine Einwegfunktion verschlüsselter alphanumerischer Code sein. Insbesondere kann vorgesehen sein, dass die biometrischen Daten der Person aus dem Token nicht reproduzierbar sind. Die Generierung des biometrischen Tokens kann mehrstufig sein, wobei in einem ersten Schritt biometrische Merkmale quantifiziert werden, und in einem zweiten Schritt aus den quantifizierten Merkmalen durch eine Einwegfunktion, beispielsweise eine mathematische Hash-Operation, der biometrische Token erstellt wird.

Ferner ist eine mit der Abgabeidentifikationseinheit in Verbindung stehende **Abgabeeinheit** vorgesehen, die dazu ausgeführt ist, einen Gepäckträger mit einer eindeutigen Gepäck-ID zur Aufnahme von Gepäck der Person bereitzustellen. Der Gepäckträger kann beispielsweise als verschließbare Kiste ausgebildet sein, auf welcher die Gepäck-ID in Form eines maschinenlesbaren Codes angeordnet ist. Die Abgabeeinheit kann in unmittelbarer Nähe der Abgabeidentifikationseinheit vorgesehen sein, oder in diese integriert sein. Die Abgabeeinheit kann dazu ausgeführt sein, das Einlegen des Gepäcks zu detektieren und den Gepäckträger in Folge zu verriegeln.

Die Gepäck-ID des bereitgestellten Gepäckträgers wird von der Abgabeeinheit oder der Abgabeidentifikationseinheit an die Datenverarbeitungseinheit übermittelt. Dabei kann vorgesehen sein, dass die Abgabeidentifikationseinheit den biometrischen Token der Person und die Gepäck-ID des bereitgestellten Gepäckträgers der Datenverarbeitungseinheit gemeinsam übermittelt, beispielsweise über eine verschlüsselte TCP/IP-Verbindung, insbesondere eine SSL-Verbindung.

Die Datenverarbeitungseinheit umfasst Kommunikationsschnittstellen, die dazu ausgebildet sind, den biometrischen Token und die Gepäck-ID entgegenzunehmen. In der internen Steuereinheit werden diese Daten einander zugeordnet und gegebenenfalls in einer Korrelationstabelle im nichtflüchtigen Speicher abgespeichert. In der **Korrelationstabelle** sind die Gepäck-ID eines oder mehrerer bereitgestellter Gepäckträger dem eindeutigen biometrischen Token einer Person zugeordnet. Das erfindungsgemäße System ermöglicht somit die automatisierte Zuordnung eines oder mehrerer Gepäckstücke zu einer Person.

In alternativen Ausführungsformen der Erfindung erfolgt die Erfassung des biometrischen Tokens der Person bereits vor Abgabe des Gepäcks, beispielsweise beim Eintritt in den Kontrollbereich oder schon beim Check-In, sodass der biometrische Token bereits in der Korrelationstabelle gespeichert ist, gegebenenfalls mit weiteren Informationen. In diesem Fall muss die Datenverarbeitungseinheit den biometrischen Token nicht abspeichern, sondern prüft das Vorhandensein des biometrischen Tokens in der Korrelationstabelle und ordnet gegebenenfalls dem entsprechenden biometrischen Token die passende Gepäck-ID zu.

Die Korrelationstabelle kann eine Vielzahl von Informationen enthalten. Insbesondere kann, zusätzlich zum biometrischen Token und dem oder den Gepäck-IDs, vorgesehen sein:
- eine fortlaufende Nummerierung der Datensätze,
- eine eindeutige Identifikation der Abgabeeinheit und des Zeitpunkts der Gepäckabgabe,
- eine eindeutige Identifikation der Person,
- Merkmale aus externen Systemen wie Zugangscode der Bordkarte und gebuchte Flugdaten,
- eine eindeutige Identifikation der zur Kontrolle des Gepäcks eingesetzten bildgebenden Untersuchungseinheit, insbesondere Computertomograph,
- die Entscheidung, ob eine manuelle Nachkontrolle des Gepäcks erfolgen soll,
- die Entscheidung, ob eine Zwischenpufferung des Gepacks erfolgen soll,
- eine eindeutige Identifikation der Entnahmeeinheit und des Zeitpunkts der Gepäckentnahme,
- eine eindeutige Identifikation des Mitarbeiters, welche die manuelle Nachkontrolle durchgeführt hat, sowie des Zeitpunkts der manuellen Nachkontrolle, und/oder
- der Status des geleerten Gepäckträgers.

Nach Abgabe des Gepäcks durchläuft die Person in herkömmlicher Weise den Personenkontrollbereich, während das Gepäck der Person im Gepäckträger einen baulich getrennten Gepäckkontrollbereich durchläuft. Nach Durchlaufen des Personenkontrollbereichs gelangt die Person in den Gepäckausgabebereich.

Im Gepäckausgabebereich ist eine **Gepäckausgabestation** angeordnet. Diese umfasst eine Ausgabeidentifikationseinheit, die dazu ausgeführt ist, biometrische Merkmale der Person zu bestimmen, daraus einen eindeutigen biometrischen Token zu generieren, und den Token an die Datenverarbeitungseinheit zu übermitteln. Das Verfahren zur Bestimmung des biometrischen Tokens ist dabei vorzugsweise identisch zu dem in der Abgabeidentifikationseinheit eingesetzten Verfahren.

Bei der Ausgabeidentifikationseinheit kann es sich beispielsweise um eine Kamera, ein Mikrofon, einen Fingerabdrucksensor oder Kombinationen dieser Vorrichtungen handeln, die dazu ausgeführt sind, biometrische Merkmale wie insbesondere Körpermerkmale, Gesichtsmerkmale, Irismerkmale, Retinamerkmale, Stimmmerkmale und/oder Fingerabdrücke einer Person zu detektieren. Wiederum kann vorgesehen sein, dass die biometrischen Merkmale zur Erlangung des biometrischen Tokens durch eine Einwegfunktion verschlüsselt werden.

Die Datenverarbeitungseinheit ist erfindungsgemäß dazu ausgebildet, den biometrischen Token entgegenzunehmen. Gegebenenfalls kann auch eine Gültigkeitsprüfung des Tokens erfolgen. Die Gültigkeitsprüfung kann insbesondere derart erfolgen, dass geprüft wird, ob der Token in Korrelationstabelle bereits erfasst ist. Sofern der Token gültig ist, ermittelt die Datenverarbeitungseinheit anhand der gespeicherten Korrelationstabelle die zugeordnete Gepäck-ID oder, im Fall mehrerer zugeordneter Gepäckträger, die Gepäck-IDs dieser Gepäckträger und übermittelt diese über geeignete Kommunikationsschnittstellen an die Gepäckausgabestation.

Erfindungsgemäß ist ferner eine mit der Gepäckausgabestation verbundene **Ausgabeeinheit** vorgesehen, die dazu ausgeführt ist, die Gepäck-ID von der Datenverarbeitungseinheit entgegenzunehmen und jenen oder jene Gepäckträger mit der entsprechenden Gepäck-ID bereitzustellen. Die Ausgabeeinheit kann dazu ausgeführt sein, den Gepäckträger zu entriegeln und die Entnahme des Gepäcks zu detektieren. Die Person kann ihr Gepäck dem Gepäckträger entnehmen und den Kontrollbereich verlassen, während der leere Gepäckträger zurückgeführt wird.

Die Gepäck-ID kann wenigstens einen maschinenlesbaren Wert umfassen. Die Gepäck-ID kann ein alphanumerischer Wert, ein maschinenlesbarer Code, etwa ein Bar-Code oder ein QR-Code, oder dergleichen sein. Die Gepäck-ID kann jedoch auch auf einem elektronischen Speichermedium gespeichert sein und insbesondere kabellos auslesbar sein, beispielsweise in Form eines RFID-Tags.

Gegebenenfalls kann vorgesehen sein, dass der Kontrollbereich einen **Zugangskontrollbereich** umfasst, um eine Person, die den Kontrollbereich betreten möchte, vorab zu kontrollieren. Insbesondere bei der Implementierung eines erfindungsgemäßen Systems auf einem Flughafen kann dies erforderlich sein, um die Berechtigung der Person, ein bestimmtes Gate zu betreten, anhand ihrer Bordkarte zu überprüfen.

Erfindungsgemäß kann vorgesehen sein, dass in dem Zugangskontrollbereich eine Leseeinheit angeordnet ist, die dazu ausgebildet ist, einen maschinenlesbaren Zugangscode auf einem Authentifizierungsdokument einer Person, beispielsweise ein Reisepass und/oder eine Bordkarte, einzulesen und der Datenverarbeitungseinheit zur Prüfung auf Gültigkeit zu übermitteln.

Die Datenverarbeitungseinheit kann zur Prüfung der Gültigkeit des Zugangscodes und zur Übermittlung des Ergebnisses der Gültigkeitsprüfung an eine Absperreinrichtung im Zugangskontrollbereich eingerichtet sein. Zu diesem Zweck können die Datenverarbeitungseinheit und die Absperreinrichtung wiederum über entsprechende Schnittstellen verfügen. Die Absperreinrichtung kann dazu ausgebildet sein, der Person bei Gültigkeit des Zugangscodes den Zugang zum Gepäckabgabebereich zu erlauben und andernfalls zu verwehren.

Im Zugangskontrollbereich können beispielsweise Bordkarten oder ähnliche Dokumente überprüft und/oder eingelesen werden. Bevorzugt wird ein Dokument bei einmaliger Benutzung entwertet. Dies bedeutet, dass eine weitere Person, die dasselbe Dokument im Zugangskontrollbereich verwenden würde, keinen Zugang mehr erhalten würde.

Erfindungsgemäß kann der Zugangskontrollbereich vor dem Gepäckabgabebereich angeordnet sein. Es kann vorgesehen sein, dass bereits im Zugangskontrollbereich eine Identifikationseinheit vorgesehen ist, die dazu ausgeführt ist, die biometrischen Merkmale der Person zu bestimmen, daraus ein eindeutigen biometrischen Token zu generieren, und den Token an die Datenverarbeitungseinheit zu übermitteln, welche in Folge den biometrischen Token erstmals in der Korrelationstabelle abspeichert. Die erstmalige Abspeicherung des biometrischen Tokens kann also im Zugangskontrollbereich, im Gepäckabgabebereich, oder in anderen Bereichen, beispielsweise dem Check-In-Bereich, erfolgen.

Erfindungsgemäß kann vorgesehen sein, dass die Datenverarbeitungseinheit dazu ausgeführt ist, den biometrischen Token und die Gepäck-ID mit dem übermittelten Zugangscode in der Korrelationstabelle zu verknüpfen. Dadurch kann eine eindeutige Zuordnung zwischen dem Gepäck, dem biometrischen Token der Person und dem Zugangscode hergestellt werden. Es versteht sich, dass auch weitere Daten und Merkmale mit dem biometrischen Token der Person in der Korrelationstabelle verknüpft werden können.

Gegebenenfalls kann vorgesehen sein, dass im Zugangskontrollbereich und/oder im Personenkontrollbereich weitere Identifikationseinheiten, insbesondere Kameras, vorgesehen sind, die dazu ausgebildet sind, biometrische Daten einer Person, insbesondere berührungslose Merkmale wie Körpermerkmale oder Gesichtsmerkmale, zu erkennen, daraus biometrische Daten abzuleiten und diese an die Datenverarbeitungseinheit zu übermitteln. Dadurch kann erreicht werden, dass der ungefähre Aufenthaltsort einer Person im Kontrollbereich jederzeit bestimmbar ist.

Gegebenenfalls kann vorgesehen sein, dass der Gepäckausgabebereich mehrere, räumlich voneinander abgetrennte Gepäckausgabestationen umfasst. Dadurch werden im Gepäckausgabebereich räumlich getrennte Teilbereiche geschaffen, zu welchen nur berechtigte Personen Zutritt haben. So wird eine geschützte Umgebung bei der Gepäckausgabe ermöglicht.

Gegebenenfalls kann vorgesehen sein, dass vorzugsweise im Personenkontrollbereich eine Informationsausgabeeinheit vorgesehen ist, die dazu ausgebildet ist, Inhalte der Korrelationstabelle auszugeben und/oder anzuzeigen. Die Informationsausgabeeinheit kann beispielsweise als Informationssäule mit Display ausgebildet sein. Diese kann basierend auf den biometrischen Merkmalen einer Person, aber auch basierend auf anderen Merkmalen, beispielsweise des maschinenlesbaren Zugangscodes, die Position des entsprechenden Gepäcks anzeigen.

Um eine bessere Steuerung des Personenflusses nach der Personenkontrolle zu erzielen, kann vorgesehen sein, dass das System mehrere voneinander getrennte Gepäckausgabebereiche umfasst. In diesem Fall kann die Informationsausgabeeinheit der Person bekanntgeben, in welchem der Gepäckausgabebereiche der oder die zugeordneten Gepäckträger bereitgestellt werden. Es kann auch vorgesehen sein, dass in jedem Gepäckausgabebereich mehrere Gepäckausgabestationen angeordnet sind. In diesem Fall kann die Informationsausgabeeinheit der Person bekanntgeben, in welchem der Gepäckausgabestationen des betreffenden Gepäckausgabebereichs der oder die zugeordneten Gepäckträger bereitgestellt werden.

Dies hat den Vorteil, dass die Verteilung der Gepäckträger effizienter erfolgen kann. Beispielsweise können bestimmten Personen ihre Gepäckträger stets an bevorzugten Gepäckausgabestationen bereitgestellt werden, um die Wartezeit besonders niedrig zu halten. Ferner können die Gepäckträger im Fall weit entfernter Gepäckausgabestationen für eine bestimmte Wartezeit in einer Pufferzone zurückgehalten werden, um die Gepäckausgabestationen nicht zu blockieren. Sowohl die Entfernung, als auch die voraussichtliche Wartezeit auf den oder die Gepäckträger kann an der Informationsausgabeeinheit angezeigt werden.

Gegebenenfalls kann vorgesehen sein, dass im Gepäckkontrollbereich wenigstens eine bildgebende Untersuchungseinheit, vorzugsweise ein CT-Scanner, angeordnet ist. Ein CT-Scanner bietet den Vorteil, dass durch eine dreidimensionale Analyse des Gepäcks eine dichtere Stapelung mehrerer Gepäckstücke bei gleichbleibender Untersuchungsqualität ermöglicht wird. Im oder außerhalb des Gepäckkontrollbereichs kann ein Nachuntersuchungsbereich vorgesehen sein, um eine manuelle Analyse des Gepäcks zu ermöglichen.

Zum Transport der Gepäckträger kann ein beliebiges Fördersystem, beispielsweise ein umlaufendes Transportband vorgesehen sein, das vom Gepäckabgabebereich über den Gepäckkontrollbereich zum Gepäckausgabebereich und wieder zurück zum Gepäckabgabebereich verläuft.

Es kann eine eigene Transportbandsteuerung vorgesehen sein, die zur Kommunikation mit der Datenverarbeitungseinheit ausgebildet ist und entsprechend angepasste Schnittstellten umfasst. Die Transportbandsteuerung kann insbesondere von der Datenverarbeitungseinheit gesteuert werden.

Vorzugsweise sind mehrere Gepäckausgabestationen vorgesehen, wobei eine von der Transportbandsteuerung gesteuerte und mit dieser verbundene Weichenanordnung zur Verteilung der Gepäckträger auf die Gepäckausgabestationen vorgesehen ist.

Erfindungsgemäß ist am Transportband nach dem Gepäckausgabebereich eine Kontrollvorrichtung vorgesehen, die dazu ausgebildet ist, den Beladungszustand und den Verschmutzungsgrad eines Gepäckträgers festzustellen. Insbesondere kann durch die Kontrollvorrichtung überprüft werden, ob ein Gepäckträger vollständig entleert wurde. Werden noch Gegenstände im Gepäckträger festgestellt, kann eine Warnmeldung ausgegeben werden.

Im Gepäckausgabebereich, insbesondere im Bereich einer Gepäckausgabestation, kann eine Pufferzone zur Zwischenlagerung von Gepäckträgern vorgesehen sein.

Dadurch kann bei einem erhöhten Personenaufkommen ein Rückstau von Gepäckträgern vermieden werden.

Erfindungsgemäß kann vorgesehen sein, dass der Gepäckträger verriegelbar ist, wobei die Abgabeeinheit dazu ausgeführt ist, den Gepäckträger zu verriegeln, und die Ausgabeeinheit dazu ausgeführt ist, den Gepäckträger zu entriegeln. Unbeladene Gepäckträger werden vorzugsweise entriegelt transportiert.

Die Erfindung betrifft ferner ein **Verfahren zur Kontrolle von Gepäck** bei einem oben beschriebenen System. Das Verfahren umfasst die folgenden Schritte:
In einem ersten Schritt erfolgt die Bestimmung, durch eine Abgabeidentifikationseinheit im Gepäckabgabebereich, biometrischer Merkmale einer Person, sowie die Generierung eines eindeutigen biometrischen Tokens, und die Übermittlung des Tokens an die Datenverarbeitungseinheit.

Im nächsten Schritt erfolgt die Bereitstellung, durch eine mit der Abgabeidentifikationseinheit verbundene Abgabeeinheit, eines Gepäckträgers mit einer eindeutigen Gepäck-ID und Übermittlung der Gepäck-ID an die Datenverarbeitungseinheit.

Im nächsten Schritt erfolgt die Entgegennahme und Zuordnung des biometrischen Tokens und der Gepäck-ID durch die Datenverarbeitungseinheit, und gegebenenfalls die Abspeicherung in einer Korrelationstabelle.

Im nächsten Schritt erfolgt die Bestimmung, durch eine Ausgabeidentifikationseinheit im Gepäckausgabebereich, biometrischer Merkmale einer Person, sowie Generierung eines eindeutigen biometrischen Tokens, und Übermittlung des Tokens an die Datenverarbeitungseinheit.

Im nächsten Schritt erfolgt die Entgegennahme des Tokens durch die Datenverarbeitungseinheit, gegebenenfalls die Prüfung auf Gültigkeit, Ermittlung der zugeordneten Gepäck-ID anhand der Korrelationstabelle und Übermittlung der zugeordneten Gepäck-ID an eine Gepäckausgabestation im Gepäckausgabebereich.

Im nächsten Schritt erfolgt die Entgegennahme, durch eine mit der Gepäckausgabestation verbundene Ausgabeeinheit, der Gepäck-ID und Bereitstellung des entsprechenden Gepäckträgers zur Entnahme des Gepäcks.

Dieses erfindungsgemäße Verfahren kann die oben im Zusammenhang mit einem erfindungsgemäßen System beschriebenen Merkmale aufweisen.

Der Zugang einer Person zum Gepäckabgabebereich kann durch folgende Schritte gesichert werden:
In einem ersten Schritt, durch das Einlesen, durch eine Leseeinheit in einem Zugangskontrollbereich des Kontrollbereichs, eines maschinenlesbaren Zugangscodes auf einem Authentifizierungsdokument, beispielsweise einer Bordkarte oder eines Reisepasses, und Übermittlung des Zugangscodes an die Datenverarbeitungseinheit zur Prüfung auf Gültigkeit.

In einem zweiten Schritt, durch die Prüfung, durch die Datenverarbeitungseinheit, der Gültigkeit des Zugangscodes und Übermittlung des Ergebnisses der Gültigkeitsprüfung an eine Absperreinrichtung im Zugangskontrollbereich.

Bei Gültigkeit des Zugangscodes erfolgt in einem dritten Schritt Freigabe des Zugangs zum Gepäckabgabebereich durch die Absperreinrichtung.

Die Datenverarbeitungseinheit kann, in einem weiteren Verfahrensschritt, den biometrischen Token und die Gepäck-ID mit dem übermittelten Zugangscode in der Korrelationstabelle verknüpfen.

Die Gepäckträger können, in weiteren Verfahrensschritten, durch ein beliebiges Fördersystem, beispielsweise ein umlaufendes Transportband vom Gepäckabgabebereich über den Gepäckkontrollbereich zum Gepäckausgabebereich und wieder zurück zum Gepäckabgabebereich transportiert werden.

Der Beladungszustand und der Verschmutzungsgrad der Gepäckträger werden erfindungsgemäß in einem weiteren Verfahrensschritt, nach dem Gepäckausgabebereich durch eine Kontrollvorrichtung geprüft.

Die Gepäckträger können, in einem weiteren Verfahrensschritt, in einer Pufferzone im Gepäckausgabebereich, insbesondere im Bereich einer Gepäckausgabestation, gelagert werden, um einen Rückstau zu vermeiden.

Weitere Merkmale der Erfindung ergeben sich aus den Patentansprüchen, den Figuren und dem Ausführungsbeispiel.

Nachfolgend wird die Erfindung anhand eines exemplarischen Ausführungsbeispiels im Detail erläutert. Es zeigen:
Fig. 1 eine schematische Darstellung eines Ausführungsbeispiels eines erfindungsgemäßen Systems;
Fig. 2 eine schematische Darstellung eines erfindungsgemäßen Gepäckträgers;
Fig. 3 ein schematisches Prozessablaufdiagramm eines erfindungsgemäßen Verfahrens.

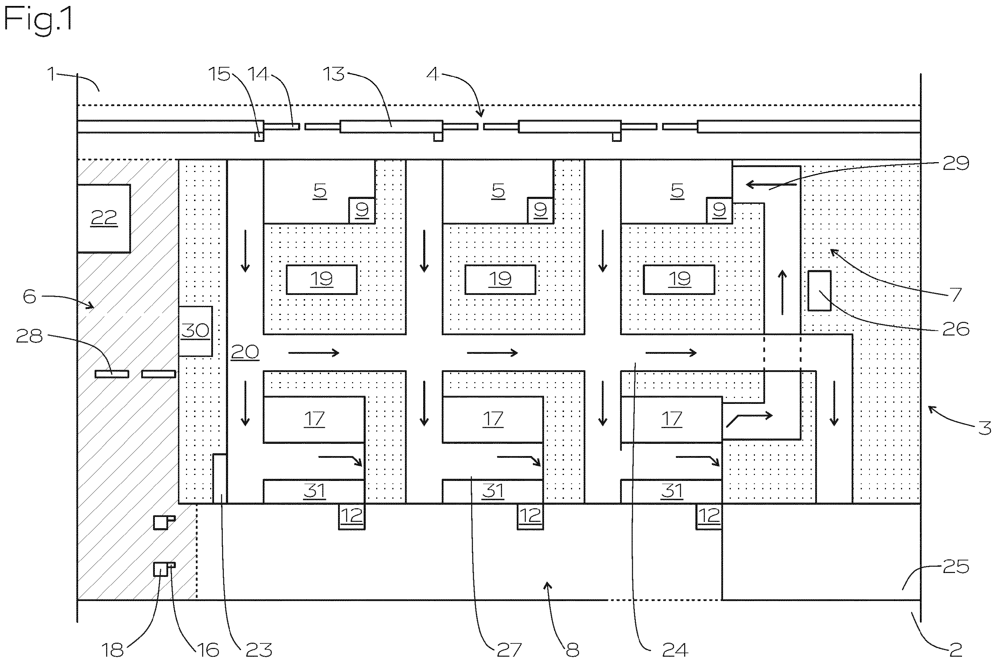

In Fig. 1 ist ein Ausführungsbeispiel eines erfindungsgemäßen Systems mit bevorzugten Merkmalen schematisch dargestellt. Das Ausführungsbeispiel betrifft ein System in einem Flughafen. Eine Umsetzung des Systems auf andere Einrichtungen liegt im üblichen Handeln eines Fachmanns und wird daher an dieser Stelle nicht im Detail erläutert.

In Fig. 1 ist ein öffentlicher Bereich 1 dargestellt. Im öffentlichen Bereich 1 kann sich beispielsweise eine Eingangshalle befinden, die für jedermann zugänglich ist. Personen bzw. Passagiere müssen zum Erreichen der Abfluggates, welche im Sicherheitsbereich 2 liegen, den Kontrollbereich 3 passieren, in welchem eine Personen- und Gepäckskontrolle durchgeführt wird. Üblicherweise tragen die Personen nur noch Handgepäck, also kleinere Koffer, Taschen, Geldbörsen, etc. an sich, da größere Gepäckstücke in der im öffentlichen Bereich 1 angeordneten Gepäcksaufgabe abgegeben und direkt zum Flugzeug gebracht werden.

Der Kontrollbereich 3 dient der Kontrolle der Personen dahingehend, ob sie berechtigt sind den Sicherheitsbereich 2 zu betreten. Eine derartige Berechtigung kann anhand von spezifischen Daten an Dokumenten, beispielsweise Ausweisdokumenten oder Bordkarten bestimmt werden. Im erfindungsgemäßen System erfolgt die Abfrage der Berechtigung im Zugangskontrollbereich 4, in welchem mehrere Absperreinrichtungen 14 vorgesehen sind, die mit Leseeinheiten 13 gekoppelt sind. Die Leseeinheiten 13 sind zum Einscannen von Bordkarten ausgebildet und sie geben einer Person bei Vorweisen einer gültigen Bordkarte den Zugang zum weiteren Kontrollbereich 3 frei.

An den Leseeinheiten13 sind weitere Identifikationseinheiten 15 vorgesehen, welche als Kameras mit Gesichtserkennungseinheit ausgebildet sind. Beim Scannen der Bordkarte werden über die weiteren Identifikationseinheiten 15 biometrische Merkmale einer Person erfasst und gemeinsam mit den Informationen der Bordkarte, wie beispielsweise Abflugzeit, Gate, Destination, etc., an eine Datenverarbeitungseinheit 22 übermittelt und in einer Korrelationstabelle gespeichert. In Folge erfolgt eine Verknüpfung dieser Daten mit der Gepäck-ID 10 des Gepäckträgers 21 dieser Person.

Nach der Zugangskontrolle erfolgt die Separation in einen Personenstrom und einen Gepäckstrom, da die Untersuchung von Personen und deren Gepäck 11 baulich völlig getrennt voneinander erfolgt. In Fig. 1 ist der Bereich des Personenstroms schraffiert dargestellt, während der Bereich des Gepäckstroms punktiert dargestellt ist. Ein Zugriff der Personen auf ihr Gepäck soll im Sicherheitsbereich grundsätzlich nicht möglich sein. Die Trennung erfolgt im Gepäckabgabebereich 5.

In diesem Ausführungsbeispiel der Erfindung sind mehrere, voneinander räumlich getrennte Gepäckabgabebereiche 5 vorgesehen. In jedem Gepäckabgabebereich 5 ist eine erste Abgabeidentifikationseinheit 9 mit einer Kamera und einer Gesichtserkennungseinheit sowie gegebenenfalls einem Fingerabdruckscanner vorgesehen, die biometrische Merkmale einer Person erfasst. Die Person, die sich im jeweiligen Gepäckabgabebereich 5 befindet, platziert ihr Gepäck 11 in einem, von einer Abgabeeinheit bereitgestellten Gepäckträger 21. Dieser Gepäckträger 21 ist eine verschließbare Kiste mit einer Gepäck-ID, 10, der als maschinenlesbarer Code ausgebildet ist. Nach dem Einlegen des Gepäcks 11 verriegelt die Abgabeeinheit den Gepäckträger 21.

Die biometrischen Merkmale der Person werden gemeinsam mit der Gepäck-ID 10 an die Datenverarbeitungseinheit 22 übermittelt, einander zugeordnet und in einer Korrelationstabelle in einem nichtflüchtigen Speicher abgespeichert. Diese Korrelationstabelle wird mit den Daten der weiteren Identifikationseinheit 15 und den Informationen der Bordkarte bzw. des Zugangscodes und gegebenenfalls weiteren Informationen erweitert.

Während sich die Personen nach Abgabe des Gepäcks 11 in den Personenkontrollbereich 6 bewegen, wird der verriegelte Gepäckträger 21 in den Gepäckkontrollbereich 7 transportiert, wo die Untersuchung erfolgt. Im Gepäckkontrollbereich 7 sind Transportbänder 20 vorgesehen, welche die Gepäckträger 21 mit dem Gepäck 11 befördern. Es sind Weichenanordnungen 24 vorgesehen, um den Zielort der Gepäckträger 21 zu verändern, wobei die Steuerung über eine Transportbandsteuerung 23 erfolgt.

Im Gepäckkontrollbereich 7 sind bildgebende Untersuchungseinrichtungen 19 vorgesehen, welche in diesem Ausführungsbeispiel als Computertomographieeinrichtungen ausgebildet sind. Diese durchleuchten die Gepäckträger 21. Eine Analyseeinheit 30 ist dazu ausgebildet, zu beurteilen, ob sich potentiell gefährliche Gegenstände oder Stoffe im Gepäck 11 befinden. Wird das Gepäck 11 als sicher beurteilt, befördert das Transportband 20 den Gepäckträger 21 mit dem Gepäck 11 in eine der Gepäckausgabestationen 17 im Gepäckausgabebereich 8.

In dieser Ausführung der Erfindung ist in jeder Gepäckausgabestation 17 eine Pufferzone 27 vorgesehen, um mehrere Gepäckträger 21 aufzunehmen und zurückzuhalten.

Wird ein Gepäck 11 durch die Analyseeinrichtung 30 als potentiell gefährlich beurteilt, erfolgt eine Umleitung in einen Nachuntersuchungsbereich 25. Die Analyseeinheit 30 ist hierzu mit der Transportbandsteuerung 23 verbunden, um eine Umleitung zu ermöglichen. Die Analyseeinheit 30 ist auch mit der Datenverarbeitungseinheit 22 verbunden und die Korrelationstabelle kann mit Informationen über den Status des Gepäcks, wie beispielsweise dem geplanten Gepäckausgabebereich bzw. der geplanten Ausgabestation oder der Bewertung durch die Analyseeinheit 30 erweitert werden.

Währenddessen passieren die Personen den Personenkontrollbereich 6, in welchem Personenkontrolleinheiten 28 vorgesehen sind. Die Personenkontrolleinheiten 28 sind in diesem Ausführungsbeispiel als Ganzkörperscanner mit Terahertz-Kameras ausgebildet. Nach den Personenkontrolleinheiten 28 sind Informationsausgabeeinheiten 18 in Form von Informationssäulen mit grafischer Anzeige, beispielsweise einem Bildschirm oder Monitor, angeordnet, welche mit weiteren Identifikationseinheiten 16 ausgerüstet sind. Diese weiteren Identifikationseinheiten 16 sind als Kameras mit Gesichtserkennungseinheit ausgebildet und erkennen biometrische Merkmale einer Person. Die weiteren Identifikationseinheiten 16 sind mit der Datenverarbeitungseinheit 22 verbunden und bei Erkennung einer Person wird entsprechend den Daten der Korrelationstabelle an den Informationsausgabeeinheiten 18 angezeigt, wo sich das Gepäck 11 der Person befindet bzw. wo dieses abgeholt werden kann, oder ob eine manuelle Nachkontrolle erfolgen muss.

Das Gepäck 11 kann sich entsprechend der Beurteilung durch die Analyseeinrichtung 30 entweder in einer Gepäckausgabestation 17 oder im Nachuntersuchungsbereich 25 befinden. Jede Gepäckausgabestation 17 ist räumlich abgetrennt und zur Zugangskontrolle sind jeweils Ausgabeidentifikationseinheiten 12 in Form von Kameras mit Gesichtserkennungseinheit vorgesehen, die mit der Datenverarbeitungseinheit 22 verbunden sind.

Wird eine Person erkannt, werden die biometrischen Merkmale mit der Korrelationstabelle abgeglichen und der Zugang zur Gepäckausgabestation wird durch eine Ausgabeeinheit 31 freigegeben. Gleichzeitig wird der entsprechende Gepäckträger 21 bereitgestellt und zur Entnahme des Gepäcks entriegelt.

Nach Entnahme des Gepäcks 11 erfolgt ein Rücktransport des leeren Gepäckträgers 21 in den Gepäckabgabebereich 5. Vor Erreichen des Gepäckabgabebereichs 5 ist eine Kontrollvorrichtung 26 vorgesehen, welche überprüft, ob der Gepäckträger 21 leer ist, also ob Gepäck 11 vergessen oder nicht abgeholt wurde, oder ob der Gepäckträger 21 verschmutzt ist. Ist ein Gepäckträger 21 nicht leer, wird ein Warnsignal ausgegeben und/oder es werden Mitarbeiter informiert.

Alternativ zu einer Gepäckausgabestation 17 befindet sich das Gepäck 11 im Nachuntersuchungsbereich 25. Hier erfolgt im Beisein der Person eine manuelle Kontrolle des Gepäcks 11.

Nach Abholung des Gepäcks 11 kann die Person den Kontrollbereich 3 durch den Ausgang 29 in den Sicherheitsbereich 2 verlassen.

Die datenverarbeitenden Einrichtungen, also insbesondere die Identifikationseinheiten 9, 12, 15, 16, die Leseeinrichtung 13, die Informationsausgabeeinheit 18, die Analyseeinheit 30, die bildgebende Untersuchungseinheit 19 und die Datenverarbeitungseinheit 22 sind in diesem Ausführungsbeispiel über eine verschlüsselte drahtlose Datenübertragungsschnittstelle, nämlich W-LAN, verbunden.

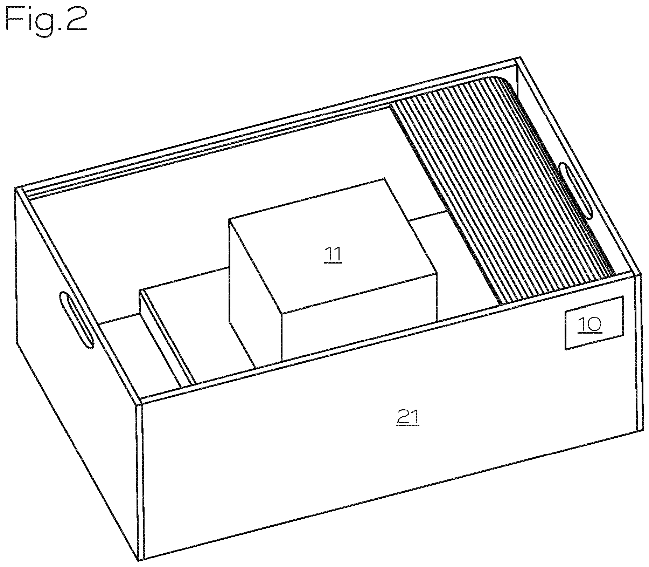

Fig. 2 zeigt eine schematische Ansicht eines Gepäckträgers 21 zur Verwendung im beschriebenen Ausführungsbeispiel. Der Gepäckträger 21 ist eine verriegelbare Kunststoffkiste, in welchem Gepäcke 11 platziert werden kann. Am Gepäckträger 21 ist ein Gepäckidentifikator 10 angeordnet, welcher in diesem Ausführungsbeispiel ein maschinenlesbarer Code ist. Der Gepäckträger 21 umfasst einen verschließbaren Deckel und Unterfächer zur Aufnahme kleinerer Gegenstände.

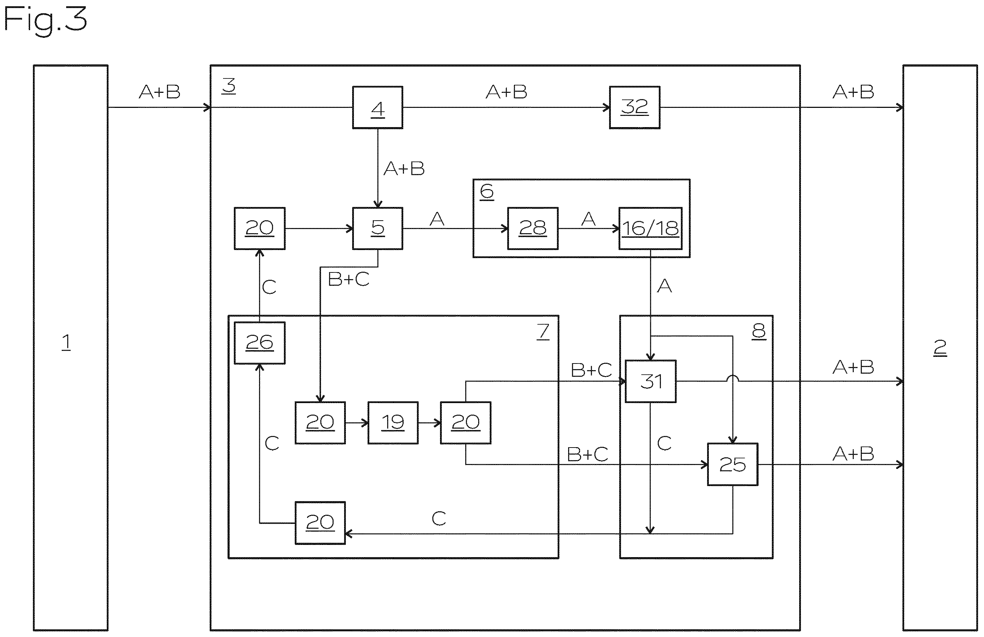

Fig. 3 zeigt ein schematisches Prozessablaufdiagramm eines erfindungsgemäßen Verfahrens zur Kontrolle von Gepäck. Dargestellt ist der Fluss von Personen A, Gepäck B und Gepäckträgern C in einem Kontrollbereich 3 zwischen einem Öffentlichen Bereich 1 und einem Sicherheitsbereich 2.

Zunächst bewegen sich Personen A mit ihrem Gepäck B in den Zugangskontrollbereich 4, in dem die Kontrolle der Bordkarte und gegebenenfalls von Ausweisdokumenten erfolgt. Bereits an diesem Punkt kann ein biometrischer Token der Person bestimmt und in der Korrelationstabelle gespeichert werden. In Folge wird die Person A mit ihrem Gepäck B entweder in eine konventionelle Sicherheitskontrolle 32 geleitet, oder in den Gepäckabgabebereich 5. Die konventionelle Sicherheitskontrolle 32 kann insbesondere dann durchgeführt werden, wenn die Person A die Aufnahme ihrer biometrischen Daten verweigert und wird in Folge nicht weiter beschrieben.

Im Gepäckabgabebereich 5 trennt sich die Person A von ihrem Gepäck B, wobei ihr biometrischer Token dem Gepäck bzw. den verwendeten Gepäckträgern zugeordnet wird. Dazu werden zunächst durch eine Abgabeidentifikationseinheit 9 die biometrischen Merkmale der Person A bestimmt, daraus ein eindeutiger biometrischer Token generiert, und dieser Token wird an eine Datenverarbeitungseinheit 22 übermittelt. Eine mit der Abgabeidentifikationseinheit 9 verbundene Abgabeeinheit stellt einen Gepäckträger 21 mit einer eindeutigen Gepäck-ID 10 zur Aufnahme des Gepäcks B bereit, und übermittelt die Gepäck-ID 10 an die Datenverarbeitungseinheit 22. Die Person legt ihr Gepäck in den entriegelten Gepäckträger 21 und verlässt den Gepäckabgabebereich 5.

Die Person A durchläuft nun einen Personenkontrollbereich 6 mit einer Personenkontrolleinrichtung 28. Nach der Personenkontrolle gelangt die Person A zu einer Informationsausgabeeinheit 18, die mit einer Identifikationseinheit 16 verbunden ist. Dort erfährt die Person A, beispielsweise nach Identifikation durch ihre Bordkarte, an welcher Ausgabeeinheit 31 und an welchem Gepäckausgabebereich 8 sie ihr Gepäck abholen kann und bewegt sich in Folge dort hin.

Währenddessen wird das Gepäck B im verriegelten Gepäckträger C über ein Transportband 20 in den Gepäckkontrollbereich 7 transportiert. Es erfolgt eine Untersuchung durch eine bildgebende Untersuchungseinheit 19, beispielsweise eine CT-Einrichtung, wobei der Gepäckträger 21 verriegelt bleibt, sodass ein unberechtigter Zugriff auf das Gepäck B nicht möglich ist. In Folge wird anhand der Ergebnisse der bildgebenden Untersuchungseinheit manuell oder automatisch, beispielsweise durch Einsatz künstlicher Intelligenz wie insbesondere neuronaler Netze, entschieden, ob eine Nachkontrolle des Gepäcks B erforderlich ist.

Ist eine manuelle Nachkontrolle des Gepäcks B erforderlich, wird das Gepäck B über das Transportband 20 in den Nachuntersuchungsbereich 25 transportiert. Dieser kann, muss aber nicht im Gepäckausgabebereich 8 oder angrenzend zu diesem angeordnet sein. Dort wird, im Beisein der Person A, das Gepäck B manuell untersucht. In Folge verlässt die Person A mit ihrem Gepäck B den Kontrollbereich 3 und betritt den Sicherheitsbereich 2.

Ist keine manuelle Nachkontrolle des Gepäcks B erforderlich, so wird das Gepäck B über das Transportband 20 in den Gepäckausgabebereich 8 transportiert und dort an einer Ausgabeeinheit 31 bereitgestellt, wenn sich die Person A an der Ausgabeidentifikationseinheit 12 der Gepäckausgabestation 17 anhand ihrer biometrischen Daten korrekt identifiziert. In Folge verlassen Person A und Gepäck B den Kontrollbereich 3 und betreten den Sicherheitsbereich 2.

Der leere Gepäckträger C verlässt, entweder nach der Ausgabeeinheit 31 oder nach dem Nachuntersuchungsbereich 25, den Gepäckausgabebereich 8 und wird über das Transportband 20 in eine Kontrollverrichtung 26 geführt, wo er automatisch auf Verschmutzung oder Beschädigung geprüft wird, und festgestellt wird, ob er tatsächlich entleert wurde. In Folge wird der Gepäckträger C wieder in den Gepäckabgabebereich 5 zur weiteren Verwendung geleitet.

Die Erfindung beschränkt sich jedoch nicht auf die dargestellten Ausführungsbeispiele, sondern umfasst sämtliche Systeme und Verfahren im Umfang der nachfolgenden Patentansprüche.

### Bezugszeichenliste

- 1: Öffentlicher Bereich
- 2: Sicherheitsbereich
- 3: Kontrollbereich
- 4: Zugangskontrollbereich
- 5: Gepäckabgabebereich
- 6: Personenkontrollbereich
- 7: Gepäckkontrollbereich
- 8: Gepäckausgabebereich
- 9: Abgabeidentifikationseinheit
- 10: Gepäck-ID
- 11: Gepäck
- 12: Ausgabeidentifikationseinheit
- 13: Leseeinrichtung
- 14: Absperreinrichtung
- 15: Identifikationseinheit
- 16: Identifikationseinheit
- 17: Gepäckausgabestation
- 18: Informationsausgabeeinheit
- 19: Bildgebende Untersuchungseinheit
- 20: Transportband
- 21: Gepäckträger
- 22: Datenverarbeitungseinheit
- 23: Transportbandsteuerung
- 24: Weichenanordnung
- 25: Nachuntersuchungsbereich
- 26: Kontrollvorrichtung
- 27: Pufferzone
- 28: Personenkontrolleinrichtung
- 29: Ausgang
- 30: Analyseeinheit
- 31: Ausgabeeinheit
- 32: Konventionelle Sicherheitskontrolle

## Patentansprüche

1. **System** zur Kontrolle von Gepäck an einem Übergang zwischen einem öffentlichen Bereich (1) und einem Sicherheitsbereich (2), zwischen denen ein Kontrollbereich (3) vorgesehen ist, das System umfasst den Kontrollbereich (3) mit einem Gepäckabgabebereich (5), einem Personenkontrollbereich (6), einem Gepäckkontrollbereich (7) sowie einem Gepäckausgabebereich (8) und einer Datenverarbeitungseinheit (22),
wobei
- im **Gepäckabgabebereich** (5) zumindest eine **Abgabeidentifikationseinheit** (9) angeordnet ist, die dazu ausgeführt ist, biometrische Merkmale einer Person zu bestimmen, daraus einen eindeutigen biometrischen Token zu generieren, und den Token an die Datenverarbeitungseinheit (22) zu übermitteln,
- eine mit der Abgabeidentifikationseinheit (9) verbundene **Abgabeeinheit** vorgesehen ist, die dazu ausgeführt ist, einen Gepäckträger (21) mit einer eindeutigen Gepäck-ID (10) zur Aufnahme von Gepäck (11) bereitzustellen, und die Gepäck-ID (10) an die Datenverarbeitungseinheit (22) zu übermitteln,
- die Datenverarbeitungseinheit (22) dazu ausgebildet ist, den biometrischen Token und die Gepäck-ID (10) entgegenzunehmen, einander zuzuordnen und in einer Korrelationstabelle abzuspeichern.
- im **Gepäckausgabebereich** (8) zumindest eine **Gepäckausgabestation** (17) angeordnet ist, in der eine **Ausgabeidentifikationseinheit** (12) angeordnet ist, die dazu ausgeführt ist, biometrische Merkmale einer Person zu bestimmen, daraus einen eindeutigen Token zu generieren, und den Token an die Datenverarbeitungseinheit (22) zu übermitteln,
- die Datenverarbeitungseinheit (22) dazu ausgebildet ist, den Token entgegenzunehmen und anhand der Korrelationstabelle die zugeordnete Gepäck-ID (10) zu ermitteln und an die Gepäckausgabestation (17) zu übermitteln,
- eine mit der Gepäckausgabestation (17) verbundene Ausgabeeinheit (31) vorgesehen ist, die dazu ausgeführt ist, die Gepäck-ID (10) entgegenzunehmen und den zugeordneten Gepäckträger (21) zur Entnahme des Gepäcks (11) bereitzustellen,
und wobei zum Transport des Gepäckträgers (21) ein Fördersystem, beispielsweise ein umlaufendes Transportband (20) vorgesehen ist, das vom Gepäckabgabebereich (5) über den Gepäckkontrollbereich (7) zum Gepäckausgabebereich (8) und wieder zurück zum Gepäckabgabebereich (5) verläuft,
**dadurch gekennzeichnet, dass** am Transportband (20) nach dem Gepäckausgabebereich (5) eine Kontrollvorrichtung (26) vorgesehen ist, die dazu ausgebildet ist, den Beladungszustand und den Verschmutzungsgrad eines Gepäckträgers (21) festzustellen.

2. System nach Anspruch 1, **dadurch gekennzeichnet, dass** es sich bei der Abgabeidentifikationseinheit (9) und bei der Ausgabeidentifikationseinheit (12) um Kameras, Mikrofone, Fingerabdrucksensoren oder Kombinationen dieser Vorrichtungen handelt, die dazu ausgeführt sind, biometrische Merkmale wie insbesondere Körpermerkmale, Gesichtsmerkmale, Irismerkmale, Retinamerkmale, Stimmmerkmale und/oder Fingerabdrücke der Person zu detektieren.

3. System nach Anspruch 1 oder 2, **dadurch gekennzeichnet, dass**
- der Kontrollbereich (3) einen Zugangskontrollbereich (4) umfasst, in dem eine Leseeinheit (13) angeordnet ist, die dazu ausgebildet ist, einen maschinenlesbaren Zugangscode auf einem Authentifizierungsdokument einer Person einzulesen und der Datenverarbeitungseinheit (22) zur Prüfung auf Gültigkeit zu übermitteln,
- die Datenverarbeitungseinheit (22) zur Prüfung der Gültigkeit des Zugangscodes eingerichtet ist, und zur Übermittlung des Ergebnisses der Gültigkeitsprüfung an eine Absperreinrichtung (14) im Zugangskontrollbereich (4) eingerichtet ist,
- die Absperreinrichtung (14) dazu ausgebildet ist, der Person bei Gültigkeit des Zugangscodes den Zugang zum Gepäckabgabebereich (5) zu erlauben und andernfalls zu verwehren.

4. System nach Anspruch 3, **dadurch gekennzeichnet, dass** die Datenverarbeitungseinheit (22) dazu ausgeführt ist, den biometrischen Token und die Gepäck-ID (10) mit dem übermittelten Zugangscode in der Korrelationstabelle zu verknüpfen.

5. System nach einem der Ansprüche 1 bis 4, **dadurch gekennzeichnet, dass** im Zugangskontrollbereich (4) und/oder im Personenkontrollbereich (6) weitere Identifikationseinheiten (15, 16), insbesondere Kameras, vorgesehen sind, die dazu ausgebildet sind, biometrische Daten einer Person, insbesondere berührungslose Merkmale wie Körpermerkmale oder Gesichtsmerkmale, zu erkennen, daraus biometrische Daten abzuleiten und diese an die Datenverarbeitungseinheit (22) zu übermitteln.

6. System nach einem der Ansprüche 1 bis 5, **dadurch gekennzeichnet, dass** mehrere, räumlich voneinander getrennte Gepäckausgabebereiche (8) und/oder in jedem Gepäckausgabebereich (8) mehrere, räumlich voneinander getrennte Gepäckausgabestationen (17) vorgesehen sind.

7. System nach einem der Ansprüche 1 bis 6, **dadurch gekennzeichnet, dass** vorzugsweise im Personenkontrollbereich (6) wenigstens eine Informationsausgabeeinheit (18) vorgesehen ist, die dazu ausgebildet ist, Inhalte der Korrelationstabelle anzuzeigen.

8. System nach einem der Ansprüche 1 bis 7, **dadurch gekennzeichnet, dass** im Gepäckkontrollbereich (7) wenigstens eine bildgebende Untersuchungseinheit (19), vorzugsweise ein CT-Scanner, angeordnet ist, und/oder dass ein Nachuntersuchungsbereich (25) vorgesehen ist, um eine manuelle Analyse des Gepäcks (11) zu ermöglichen.

9. System nach einem der Ansprüche 1 bis 8, **dadurch gekennzeichnet, dass** eine Transportbandsteuerung (23) vorgesehen ist, die zur Kommunikation mit der Datenverarbeitungseinheit (22) ausgebildet ist.

10. System nach einem der Ansprüche 1 bis 9, **dadurch gekennzeichnet, dass** mehrere Gepäckausgabestationen (17) vorgesehen sein, wobei eine mit der Transportbandsteuerung (23) verbundene Weichenanordnung (24) zur Verteilung der Gepäckträger (21) auf die Gepäckausgabestationen (17) vorgesehen ist, und/oder dass im Gepäckausgabebereich (8), insbesondere im Bereich einer Gepäckausgabestation (17), eine Pufferzone (27) zur Zwischenlagerung von Gepäckträgern (21) vorgesehen ist.

11. System nach einem der Ansprüche 1 bis 10, **dadurch gekennzeichnet, dass** der Gepäckträger (21) verriegelbar ist, wobei
- die Abgabeeinheit dazu ausgeführt ist, den Gepäckträger (21) zu verriegeln, und
- die Ausgabeeinheit (31) dazu ausgeführt ist, den Gepäckträger (21) zu entriegeln.

12. **Verfahren** zur Kontrolle von Gepäck am Übergang zwischen einem öffentlichen Bereich (1) und einem Sicherheitsbereich (2), zwischen denen ein Kontrollbereich (3) vorgesehen ist, der einen Gepäckabgabebereich (5), einen Personenkontrollbereich (6), einen Gepäckkontrollbereich (7) sowie einen Gepäckausgabebereich (8) und eine Datenverarbeitungseinheit (22) umfasst,
wobei das Verfahren die folgenden Schritte umfasst:
- **Bestimmung,** durch eine Abgabeidentifikationseinheit (9) im Gepäckabgabebereich (5), biometrischer Merkmale einer Person, **Generierung** eines eindeutigen biometrischen Tokens, und **Übermittlung** des Tokens an die Datenverarbeitungseinheit (22),
- **Bereitstellung,** durch eine mit der Abgabeidentifikationseinheit (9) verbundene Abgabeeinheit, eines Gepäckträgers (21) mit einer eindeutigen Gepäck-ID (10) und **Übermittlung** der Gepäck-ID (10) an die Datenverarbeitungseinheit (22),
- **Entgegennahme** und **Zuordnung** des biometrischen Tokens und der Gepäck-ID (10) durch die Datenverarbeitungseinheit (22), und **Abspeicherung** in einer Korrelationstabelle,
- **Bestimmung,** durch eine Ausgabeidentifikationseinheit (12) im Gepäckausgabebereich (5), biometrischer Merkmale einer Person, **Generierung** eines eindeutigen biometrischen Tokens, und **Übermittlung** des Tokens an die Datenverarbeitungseinheit (22),
- **Entgegennahme** des Tokens durch die Datenverarbeitungseinheit (22), **Ermittlung** der zugeordneten Gepäck-ID (10) anhand der Korrelationstabelle und Übermittlung der zugeordneten Gepäck-ID (10) an eine Gepäckausgabestation (17) im Gepäckausgabebereich (8),
- **Entgegennahme,** durch eine mit der Gepäckausgabestation (17) verbundene Ausgabeeinheit (31), der Gepäck-ID (10) und **Bereitstellung** des entsprechenden Gepäckträgers (21) zur Entnahme des Gepäcks (11)
wobei die Gepäckträger (21) durch ein Fördersystem, beispielsweise ein umlaufendes Transportband (20) vom Gepäckabgabebereich (5) über den Gepäckkontrollbereich (7) zum Gepäckausgabebereich (8) und wieder zurück zum Gepäckabgabebereich (5) transportiert werden,
**dadurch gekennzeichnet, dass** der Beladungszustand und der Verschmutzungsgrad der Gepäckträger (21) nach dem Gepäckausgabebereich (5) durch eine Kontrollvorrichtung (26) geprüft werden.

13. Verfahren nach Anspruch 12, **dadurch gekennzeichnet, dass** der Zugang einer Person zum Gepäckabgabebereich (5) durch folgende Schritte gesichert wird:
- Einlesen, durch eine Leseeinheit (13) in einem Zugangskontrollbereich (4) des Kontrollbereichs (3), eines maschinenlesbaren Zugangscodes auf einem Authentifizierungsdokument, und Übermittlung des Zugangscodes an die Datenverarbeitungseinheit (22) zur Prüfung auf Gültigkeit,
- Prüfung, durch die Datenverarbeitungseinheit (22), der Gültigkeit des Zugangscodes und Übermittlung des Ergebnisses der Gültigkeitsprüfung an eine Absperreinrichtung (14) im Zugangskontrollbereich (4),
- bei Gültigkeit des Zugangscodes, Freigabe des Zugangs zum Gepäckabgabebereich (5) durch die Absperreinrichtung (14).

14. Verfahren nach Anspruch 13, **dadurch gekennzeichnet, dass** die Datenverarbeitungseinheit (22) den biometrischen Token und die Gepäck-ID (10) mit dem übermittelten Zugangscode in der Korrelationstabelle verknüpft.

15. Verfahren nach einem der Ansprüche 12 bis 14, **dadurch gekennzeichnet, dass** Gepäckträger (21) in einer Pufferzone (27) im Gepäckausgabebereich (8), insbesondere im Bereich einer Gepäckausgabestation (17), gelagert werden, und/oder dass die Abgabeeinheit nach dem Einlegen des Gepäcks (11) in den Gepäckträger (21) diesen verriegelt und die Ausgabeeinheit (31) den Gepäckträger (21) zur Entnahme des Gepäcks (11) entriegelt.

## Claims

1. A **system** for controlling baggage at a transition from a public area (1) to a restricted area (2), between which a control area (3) is provided, the system comprising the control area (3) including a baggage check-in area (5), a passenger screening area (6), a baggage control area (7) as well as a baggage reclaim area (8) and a data processing unit (22),
wherein
- in the **baggage check-in area** (5), at least one **check-in identification unit** (9) is arranged, which is configured to determine biometric features of a person, to generate an unambiguous biometric token therefrom and to transmit the token to the data processing unit (22),
- a **check-in unit** is provided, which is connected to the check-in identification unit (9) and is configured to provide a baggage carrier (21) with an unambiguous baggage ID (10) for receiving baggage (11) and to transmit the baggage ID (10) to the data processing unit (22),
- the data processing unit (22) is configured to receive the biometric token and the baggage ID (10), to associate them with each other and to store them in a correlation table,
- in the **baggage reclaim area** (8), at least one **baggage reclaim station** (17) is arranged, in which a **reclaim identification unit** (12) is arranged, which is configured to determine biometric features of a person, to generate an unambiguous token therefrom and to transmit the token to the data processing unit (22),
- the data processing unit (22) is configured to receive the token and to determine the associated baggage ID (10) on the basis of the correlation table and to transmit it to the baggage reclaim station (17),
- a reclaim unit (31) is provided, which is connected to the baggage reclaim station (17) and is configured to receive the baggage ID (10) and to provide the associated baggage carrier (21) for removing the baggage (11),
and wherein, for the transport of the baggage carrier (21), a conveyor system, e.g. a revolving conveyor belt (20), is provided, which passes from the baggage check-in area (5) via the baggage control area (7) to the baggage reclaim area (8) and back to the baggage check-in area (5),
**characterised in that** a control device (26) is provided on the conveyor belt (20) after the baggage reclaim area (5), the control device being configured to determine the load condition and the degree of contamination of a baggage carrier (21).

2. The system according to claim 1, **characterised in that** the check-in identification unit (9) and the reclaim identification unit (12) are cameras, microphones, fingerprint sensors or combinations of these devices, which are configured to detect biometric features such as in particular physical features, facial features, features relating to the iris, retinal features, vocal features, and/or fingerprints of the person.

3. The system according to claim 1 or 2, **characterised in that**
- the control area (3) comprises an access control area (4), in which a reading unit (13) is arranged, which is configured to scan a machine-readable access code on an authentication document of a person and to transmit it to the data processing unit (22) for validity verification,
- the data processing unit (22) is configured to verify the validity of the access code and to transmit the result of the validity verification to a barrier device (14) in the access control area (4),
- the barrier device (14) is configured to allow the person access to the baggage check-in area (5) provided that the access code is valid, and to deny it otherwise.

4. The system according to claim 3, **characterised in that** the data processing unit (22) is configured to associate the biometric token and the baggage ID (10) with the transmitted access code in the correlation table.

5. The system according to one of claims 1 to 4, **characterised in that** further identification units (15, 16), in particular cameras, are provided in the access control area (4), and/or in the passenger screening area (6), the identification units being configured to recognize biometric data of a person, in particular non-contact features such as physical features or facial features, to derive biometric data therefrom and to transmit it to the data processing unit (22).

6. The system according to one of claims 1 to 5, **characterised in that** multiple, spatially separated baggage reclaim areas (8), and/or ,in each baggage reclaim area (8), multiple, spatially separated baggage reclaim stations (17) are provided.

7. The system according to one of claims 1 to 6, **characterised in that**, preferably in the passenger screening area (6), at least one information output unit (18) is provided, which is configured to display contents of the correlation table.

8. The system according to one of claims 1 to 7, **characterised in that** at least one imaging examination unit (19), preferably a CT scanner, is arranged in the baggage control area (7), and/or that a secondary inspection area (25) is provided to enable manual analysis of the baggage (11).

9. The system according to one of claims 1 to 8, **characterised in that** a conveyor belt control system (23) is provided, which is configured to communicate with the data processing unit (22).

10. The system according to one of claims 1 to 9, **characterised in that** multiple baggage reclaim stations (17) are provided, wherein a switch arrangement (24) connected to the conveyor belt control system (23) is provided for distributing the baggage carriers (21) among the baggage reclaim stations (17), and/or that a buffer zone (27) for the temporary storage of baggage carriers (21) is provided in the baggage reclaim area (8), in particular in the area of a baggage reclaim station (17).

11. The system according to one of claims 1 to 10, **characterised in that** the baggage carrier (21) can be locked, wherein
- the check-in unit is configured to lock the baggage carrier (21) and
- the reclaim unit (31) is configured to unlock the baggage carrier (21).

12. A **method** for controlling baggage at the transition from a public area (1) to a security area (2), between which a control area (3) is provided, which comprises a baggage check-in area (5), a passenger screening area (6), a baggage control area (7) as well as a baggage reclaim area (8) and a data processing unit (22),
wherein the method comprises the following steps:
- **determining,** by a check-in identification unit (9) in the baggage check-in area (5), biometric features of a person, **generating** an unambiguous biometric token, and **transmitting** the token to the data processing unit (22),
- **providing,** by a check-in unit connected to the check-in identification unit (9), a baggage carrier (21) with an unambiguous baggage ID (10) and **transmitting** the baggage ID (10) to the data processing unit (22),
- **receiving** and **associating,** by the data processing unit (22), the biometric token and the baggage ID (10), and **storing** it in a correlation table,
- **determining,** by a reclaim identification unit (12) in the baggage reclaim area (5), biometric features of a person, **generating** an unambiguous biometric token, and **transmitting** the token to the data processing unit (22),
- **receiving** the token by the data processing unit (22), **determining** the associated baggage ID (10) on the basis of the correlation table and transmitting the associated baggage ID (10) to a baggage reclaim station (17) in the baggage reclaim area (8),
- **receiving,** by a reclaim unit (31), the baggage ID (10) connected to the baggage reclaim station (17), and **providing** the corresponding baggage carrier (21) for removing the baggage (11),
wherein the baggage carriers (21) are transported by a conveyor system, e.g. a revolving conveyor belt (20), from the baggage check-in area (5) via the baggage control area (7) to the baggage reclaim area (8) and back to the baggage check-in area (5),
**characterised in that** the load condition and the degree of contamination of the baggage carriers (21) are assessed by a control device (26) after the baggage reclaim area (5).

13. The method according to claim 12, **characterised in that** the access by a person to the baggage check-in area (5) is secured by the following steps:
- scanning of a machine-readable access code on an authentication document by a reading unit (13) in an access control area (4) of the control area (3), and transmitting the access code to the data processing unit (22) for validity verification,
- verifying the validity of the access code by the data processing unit (22), and transmitting the result of the validity verification to a barrier device (14) in the access control area (4),
- provided that the access code is valid, enabling access to the baggage check-in area (5) by the barrier device (14).

14. The method according to claim 13, **characterised in that** the data processing unit (22) associates the biometric token and the baggage ID (10) with the transmitted access code in the correlation table.

15. The method according to one of claims 12 to 14, **characterised in that** baggage carriers (21) are stored in a buffer zone (27) in the baggage reclaim area (8), in particular in the area of a baggage reclaim station (17), and/or that the check-in unit locks the baggage carrier (21) after the baggage (11) has been placed in it and the reclaim unit (31) unlocks the baggage carrier (21) for removing of the baggage (11).

## Revendications

1. **Système** de contrôle des bagages à un passage entre une zone publique (1) et une zone de sécurité (2), entre lesquelles est prévue une zone de contrôle (3), le système comprenant la zone de contrôle (3) avec une zone de dépôt des bagages (5), une zone de contrôle des personnes (6), une zone de contrôle des bagages (7) ainsi qu'une zone de distribution des bagages (8) et une unité de traitement des données (22),
dans lequel
- dans la **zone de dépôt des bagages** (5) est disposée au moins une **unité d'identification** de **dépôt** (9) qui est conçue pour déterminer les caractéristiques biométriques d'une personne, pour générer à partir de celles-ci un jeton biométrique unique et pour transmettre le jeton à l'unité de traitement des données (22),
- une **unité de dépôt** reliée à l'unité d'identification de dépôt (9) est prévue, qui est conçue pour fournir un porte-bagages (21) avec un identifiant de bagage (10) unique pour recevoir des bagages (11) et pour transmettre l'identifiant de bagage (10) à l'unité de traitement de données (22),
- l'unité de traitement des données (22) est conçue pour recevoir le jeton biométrique et l'identifiant de bagage (10), les associer l'un à l'autre et les enregistrer dans un tableau de corrélation,
- dans la zone de **distribution des bagages** (8) est disposée au moins une **station de distribution des bagages** (17), dans laquelle est disposée une **unité d'identification de distribution** (12) qui est conçue pour déterminer les caractéristiques biométriques d'une personne, pour générer à partir de celles-ci un jeton unique et pour transmettre le jeton à l'unité de traitement des données (22),
- l'unité de traitement des données (22) est conçue pour recevoir le jeton et, à l'aide du tableau de corrélation, déterminer l'identifiant de bagage (10) associé et le transmettre à la station de distribution des bagages (17),
- une unité de distribution (31) reliée à la station de distribution des bagages (17) est prévue, qui est conçue pour recevoir l'identifiant de bagage (10) et pour mettre à disposition le porte-bagages (21) associé afin de retirer le bagage (11),
et dans lequel, pour transporter le porte-bagages (21), un système de convoyage, par exemple une bande transporteuse (20) circulaire, est prévu, qui s'étend de la zone de dépôt des bagages (5) à la zone de contrôle des bagages (7), puis à la zone de distribution des bagages (8) et revient à la zone de dépôt des bagages (5),
**caractérisé en ce qu'**un dispositif de contrôle (26) est prévu sur la bande transporteuse (20) après la zone de distribution des bagages (5), qui est conçu pour déterminer l'état de chargement et le degré d'encrassement d'un porte-bagages (21).

2. Système selon la revendication 1, **caractérisé en ce que** l'unité d'identification de dépôt (9) et l'unité d'identification de distribution (12) sont des caméras, des microphones, des capteurs d'empreintes digitales ou des combinaisons de ces dispositifs, qui sont conçus pour détecter des caractéristiques biométriques telles que, en particulier, des caractéristiques corporelles, des caractéristiques faciales, des caractéristiques de l'iris, des caractéristiques de la rétine, des caractéristiques vocales et/ou des empreintes digitales de la personne.

3. Système selon la revendication 1 ou 2, **caractérisé en ce que**
- la zone de contrôle (3) comprend une zone de contrôle d'accès (4) dans laquelle est disposée une unité de lecture (13) qui est conçue pour lire un code d'accès lisible par machine sur un document d'authentification d'une personne et pour le transmettre à l'unité de traitement de données (22) afin d'en vérifier la validité,
- l'unité de traitement de données (22) est configurée pour vérifier la validité du code d'accès et pour transmettre le résultat de la vérification de validité à un dispositif de barrière (14) dans la zone de contrôle d'accès (4),
- le dispositif de barrière (14) est conçu pour autoriser l'accès à la zone de dépôt des bagages (5) à la personne en cas de validité du code d'accès et, dans le cas contraire, pour le lui refuser.

4. Système selon la revendication 3, **caractérisé en ce que** l'unité de traitement de données (22) est conçue pour associer le jeton biométrique et l'identifiant de bagage (10) au code d'accès transmis dans la table de corrélation.

5. Système selon l'une des revendications 1 à 4, **caractérisé en ce que**, dans la zone de contrôle d'accès (4) et/ou dans la zone de contrôle des personnes (6), d'autres unités d'identification (15, 16), en particulier des caméras, sont prévues, lesquelles sont conçues pour reconnaître les données biométriques d'une personne, en particulier les caractéristiques sans contact telles que les caractéristiques corporelles ou faciales, pour en déduire des données biométriques et pour transmettre celles-ci à l'unité de traitement des données (22).

6. Système selon l'une des revendications 1 à 5, **caractérisé en ce que** plusieurs zones de distribution des bagages (8) espacées les unes des autres et/ou, dans chaque zone de distribution des bagages (8), plusieurs stations de distribution des bagages (17) espacées les unes des autres sont prévues.

7. Système selon l'une des revendications 1 à 6, **caractérisé en ce qu'**au moins une unité de sortie d'informations (18) est prévue, de préférence dans la zone de contrôle des personnes (6), qui est conçue pour afficher le contenu du tableau de corrélation.

8. Système selon l'une des revendications 1 à 7, **caractérisé en ce qu'**au moins une unité d'examen d'imagerie (19), de préférence un scanner CT, est disposée dans la zone de contrôle des bagages (7), et/ou **en ce qu'**une zone d'examen de suivi (25) est prévue pour permettre une analyse manuelle des bagages (11).

9. Système selon l'une des revendications 1 à 8, **caractérisé en ce qu'**une commande de bande transporteuse (23) est prévue, qui est conçue pour communiquer avec l'unité de traitement de données (22).

10. Système selon l'une des revendications 1 à 9, **caractérisé en ce que** plusieurs stations de distribution des bagages (17) sont prévues, un dispositif d'aiguillage (24) relié à la commande de bande transporteuse (23) étant prévu pour répartir les porte-bagages (21) entre les stations de distribution des bagages (17), et/ou **en ce que**, dans la zone de distribution de bagages (8), en particulier dans la zone d'une station de distribution des bagages (17), une zone tampon (27) est prévue pour le stockage intermédiaire des porte-bagages (21).

11. Système selon l'une des revendications 1 à 10, **caractérisé en ce que** le porte-bagages (21) est verrouillable, dans lequel
- l'unité de dépôt est conçue pour verrouiller le porte-bagages (21) et
- l'unité de sortie (31) est conçue pour déverrouiller le porte-bagages (21).

12. **Procédé** de contrôle des bagages au passage entre une zone publique (1) et une zone de sécurité (2), entre lesquelles est prévue une zone de contrôle (3) qui comprend une zone de dépôt des bagages (5), une zone de contrôle des personnes (6), une zone de contrôle des bagages (7) ainsi qu'une zone de distribution des bagages (8) et une unité de traitement des données (22), le procédé comprenant les étapes suivantes :
- **détermination,** par une unité d'identification de dépôt (9) dans la zone de dépôt des bagages (5), des caractéristiques biométriques d'une personne, **génération** d'un jeton biométrique unique et **transmission** du jeton à l'unité de traitement des données (22),
- **mise à disposition,** par une unité de dépôt reliée à l'unité d'identification de dépôt (9), d'un porte-bagages (21) avec un identifiant de bagage (10) unique et **transmission** de l'identifiant de bagage (10) à l'unité de traitement de données (22),
- **réception et association** du jeton biométrique et de l'identifiant de bagage (10) par l'unité de traitement des données (22), et **enregistrement** dans un tableau de corrélation,
- **détermination,** par une unité d'identification de distribution (12) dans la zone de distribution des bagages (5), des caractéristiques biométriques d'une personne, **génération** d'un jeton biométrique unique et **transmission** du jeton à l'unité de traitement des données (22),
- **réception** du jeton par l'unité de traitement des données (22), **détermination** de l'identifiant de bagage (10) attribué à l'aide du tableau de corrélation et transmission de l'identifiant de bagage (10) associé à une station de distribution des bagages (17) dans la zone de distribution des bagages (8),
- **réception,** par une unité de distribution (31) reliée à la station de distribution des bagages (17), de l'identifiant de bagage (10) et **mise à disposition** du porte-bagages (21) correspondant pour le retrait du bagage (11),
les porte-bagages (21) étant transportés par un système de convoyage, par exemple une bande transporteuse (20) circulaire, depuis la zone de dépôt des bagages (5) jusqu'à la zone de contrôle des bagages (7), puis jusqu'à la zone de distribution des bagages (8) et enfin de nouveau jusqu'à la zone de dépôt des bagages (5),
**caractérisé en ce que** l'état de chargement et le degré d'encrassement des porte-bagages (21) sont contrôlés après la zone de distribution des bagages (5) par un dispositif de contrôle (26).

13. Procédé selon la revendication 12, **caractérisé en ce que** l'accès d'une personne à la zone de dépôt des bagages (5) est sécurisé par les étapes suivantes :
- lecture, par une unité de lecture (13) dans une zone de contrôle d'accès (4) de la zone de contrôle (3), d'un code d'accès lisible par machine sur un document d'authentification, et transmission du code d'accès à l'unité de traitement de données (22) pour vérifier sa validité,
- vérification, par l'unité de traitement des données (22), de la validité du code d'accès et transmission du résultat de la vérification de validité à un dispositif de barrière (14) dans la zone de contrôle d'accès (4),
- en cas de validité du code d'accès, autorisation d'accès à la zone de dépôt des bagages (5) par le dispositif de barrière (14).

14. Procédé selon la revendication 13, **caractérisé en ce que** l'unité de traitement de données (22) associe le jeton biométrique et l'identifiant de bagage (10) au code d'accès transmis dans la table de corrélation.

15. Procédé selon l'une des revendications 12 à 14, **caractérisé en ce que** les porte-bagages (21) sont stockés dans une zone tampon (27) dans la zone de distribution des bagages (8), en particulier dans la zone d'une station de distribution des bagages (17), et/ou **en ce que** l'unité de dépôt, après avoir placé le bagage (11) dans le porte-bagages (21), verrouille celui-ci et l'unité de distribution (31) déverrouille le porte-bagages (21) pour permettre le retrait du bagage (11).
